# EUROPEAN PATENT APPLICATION

(11) **EP 0 926 524 A1**
(43) Date of publication of application: **30.06.1999**
(21) Application number: 98123057.6
(22) Date of filing: 09.12.1998
(51) Int. Cl.: G02B 6/44

(54) **Optical-fiber cable and manufacturing method thereof**

(30) Priority: 10.12.1997 JP 33991597
(71) Applicant: Sumitomo Electric Industries, Ltd., Osaka-shi, Osaka 541-0041 (JP)
(72) Inventor: Ujiie, Seigo, Yokohama Works of Sumitomo, Yokohama-shi, Kanagawa (JP); Watanabe, Masakazu, Yokohama Works of Sumitomo, Yokohama-shi, Kanagawa (JP)
(74) Representative: HOFFMANN - EITLE

(57) **Abstract**

A manufacturing method of a cord-type optical-fiber cable which comprises optical fibers, tension members and a jacketing of thermoplastic resin and which has a low transmission loss. The optical fibers and tension members are heated collectively at a preheater before they enter into the wire guide nipple of the extruder, and the thermoplastic resin is extruded over the optical fibers and tension members to complete a cord-type optical-fiber cable. The preheating of the optical fibers and tension members reduces the temperature difference between the thermoplastic resin and the optical fibers and suppresses the development of surface roughness of the internal surface of the jacketing.

## Description

### BACKGROUND OF THE INVENTION

### Field of the Invention

The present invention relates to a cord-type optical-fiber cable covered with extruded thermoplastic resin and manufacturing method thereof.

### Description of the Background Art

In communication networks of optical-fiber cables, cord-type optical-fiber cables are used as terminating cables or distribution cables in buildings.

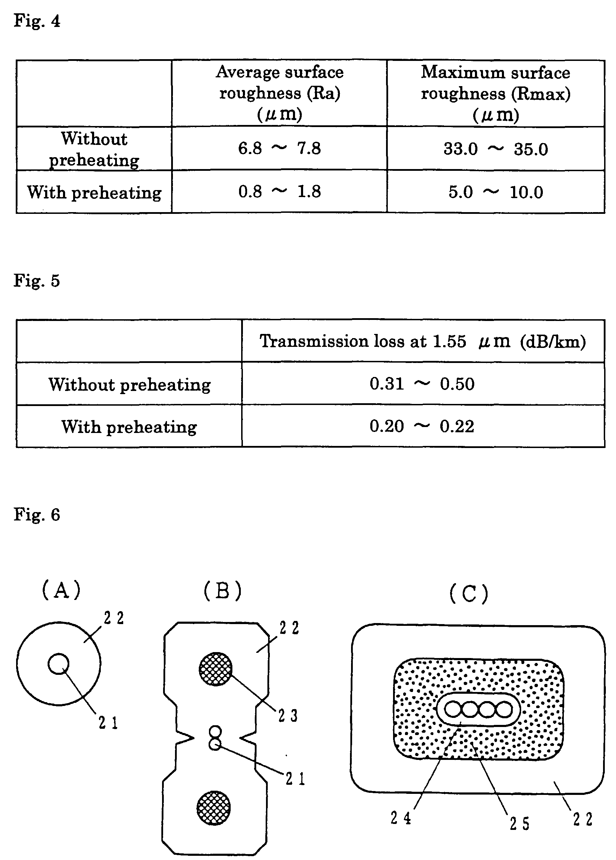

Figure 6 shows cross-sectional views of a few examples of cord-type optical-fiber cables. In the figure, 21 represents an optical fiber, 22 a jacketing, 23 a tension member, 24 an optical fiber ribbon, and 25 a fibrous tension member.

Figure 6 (A) shows an optical fiber 21 covered with a jacketing 22 of extruded thermoplastic resin. The optical fiber 21 usually has a protective coating, for example, made of ultraviolet-setting resin. The jacketing 22 adheres fast to the optical fiber 21, resulting in a tight structure. The optical fibers of the invention include those optical fibers having such a protective coating. Although the figure shows the single optical fiber 21 covered with the jacketing 22, there are many variations in which a plurality of optical fibers that are paralleled or stranded together are covered with a jacketing. Since this kind of cord-type optical-fiber cable has no tension member, it is used in installations, such as indoor wiring, where no great tension is applied to the cable.

Figure 6 (B) shows an example of a cord-type optical-fiber cable having tension members. In this example, a pair of optical fibers 21 are provided with tension members 23 on both sides thereof, and an extruded jacketing 22 is applied over them. In this cord-type optical-fiber cable also, the jacketing 22 adheres fast to the optical fibers 21, resulting in a tight structure. This cable having the tension members 23 is suitable for aerial installations and can be used as a drop cable from a joint box to a house.

Figure 6 (C) shows an example using an optical fiber ribbon. In this example, a fibrous tension member 25 is longitudinally laid around the optical fiber ribbon 24, and an extruded jacketing 22 is formed over the tension member 25. The jacketing 22 does not adhere fast to the optical fiber ribbon 24 and the tension member 25, resulting in a loose structure. The tension member 25 is, for example, made of a plurality of aromatic polyamide-based plastic fibers (aramid fiber), such as Kevlar (a registered trademark) and polyparaphenylene benzobis oxazole (PBO).

PVC or other thermoplastic resin is used as the jacketing material for these cord-type optical-fiber cables. The jacketing material is extruded through the gap between a die and wire guide nipple in an extruding head to cover optical fibers and other members. The optical fibers and other members inserted into the wire guide nipple go through the wire guide nipple to unite with the jacketing material at the exit of the die. The extruding head and the material are heated at a specified temperature at the time of extrusion. On the other hand, the optical fibers and other members to be inserted into the wire guide nipple have a normal temperature. When the cold optical fibers and other members are inserted into the wire guide nipple loaded with the jacketing material heated at the specified temperature, the temperature difference between the wire guide nipple and the inserted members gradually deprives the wire guide nipple of heat, reducing the wire guide nipple temperature to a temperature lower than the specified value. The temperature of the jacketing material contacting with the surface of the wire guide nipple also decreases. It was found that this temperature decrease causes a decrease in viscosity of the jacketing material and a flow-speed difference between the inner surface portion and outer surface portion of the material, generating a rough internal surface of the jacketing. Such surface roughness of the surface that contacts directly with the optical fibers or other members causes micro-bending of the optical fibers, considerably increasing the transmission loss, one of the optical characteristics. Cord-type optical-fiber cables, illustrated in Figs. 6 (A) and (B), having a tightly adhered jacketing are significantly subject to the influence of the surface roughness of the internal surface of the jacketing. A cord-type optical-fiber cable shown in Fig. 6 (C) has a loose structure in which the jacketing does not adhere fast to the optical fiber ribbon and the fibrous tension member. Even in this type of cable there are places where the optical fiber ribbon directly contacts with the jacketing as the optical fiber ribbon does not necessarily lie at the center of the tension member. At these places, if the jacketing has a rough internal surface, the optical fibers undergo a bending, causing the foregoing problem.

### SUMMARY OF THE INVENTION

In view of the foregoing, it is an object of the present invention to offer a cord-type optical-fiber cable having a low transmission loss and the manufacturing method thereof.

In a first embodiment of the present invention, the cord-type optical fiber cable has a jacketing of extruded thermoplastic resin over optical fibers, wherein surface roughness of the internal surface portion of the thermoplastic-resin jacketing that contacts with the optical fibers is 1.8 µm or less in average surface roughness (Ra).

In a second embodiment of the present invention, the cord-type optical fiber cable has a jacketing of extruded thermoplastic resin over optical fibers and tension members, wherein surface roughness of the internal surface of the thermoplastic-resin jacketing that contacts with the optical-fiber is 1.8 µm or less in average surface roughness (Ra).

In a third embodiment of the present invention, the cord-type optical fiber cable has a jacketing of extruded thermoplastic resin over a fibrous tension member longitudinally laid around optical fibers, wherein surface roughness of the internal surface of the thermoplastic-resin jacketing that contacts with the optical fiber is 1.8 µm or less in average surface roughness (Ra).

A fourth embodiment of the present invention is a manufacturing method of cord-type optical-fiber cables having a jacketing of thermoplastic resin extruded over optical fibers in such a way that the internal surface of the jacketing contacts with the optical fibers, wherein the optical fibers are heated before the thermoplastic resin is extruded to cover the optical fibers.

A fifth embodiment of the present invention is a manufacturing method of cord-type optical-fiber cables having a jacketing of extruded thermoplastic resin over optical fibers and tension members, wherein the optical fibers and tension members are heated before the thermoplastic resin is extruded to cover the optical fiber s and tension members.

A sixth embodiment of the present invention is a manufacturing method of cord-type optical-fiber cables having a jacketing of extruded thermoplastic resin over a fibrous tension member longitudinally laid around optical fibers, wherein at least either of the optical fibers and the fibrous tension members are heated before the thermoplastic resin is extruded to cover the optical fibers and the tension members.

A seventh embodiment of the present invention is a manufacturing method of cord-type optical-fiber cables as defined in any one of the above-mentioned 4th through 6th embodiments, wherein the preheating is carried out at a temperature of 50 °C or higher.

The term "optical fibers" as used herein means one or more of optical fibers, optical fiber ribbons or any combination thereof. The term "tension members" as used herein means one or more tension members. The surface roughness as used herein is measured in accordance with Japanese Industrial Standard B 0601.

According to the invention, the preheating of optical fibers and tension members before inserting into an extruder enables the realization of a thermoplastic-resin jacketing having a smooth internal surface and consequently secures sufficient transmission characteristics of optical fibers.

### BRIEF DESCRIPTION OF THE DRAWING

In the drawing:
Fig. 1 is a schematic diagram showing one embodiment of process for manufacturing a cord-type optical-fiber cable of the invention.
Fig. 2 is a schematic diagram showing another embodiment of a process for manufacturing a cord-type optical-fiber cable of the invention.
Fig. 3 is a schematic diagram showing still another embodiment of a process for manufacturing a cord-type optical-fiber cable of the invention.
Fig. 4 shows measured results of surface roughness.
Fig. 5 shows measured results of transmission losses.
Fig. 6 shows cross-sectional views of a few examples of cord-type optical-fiber cables.

### DETAILED DESCRIPTION OF THE INVENTION

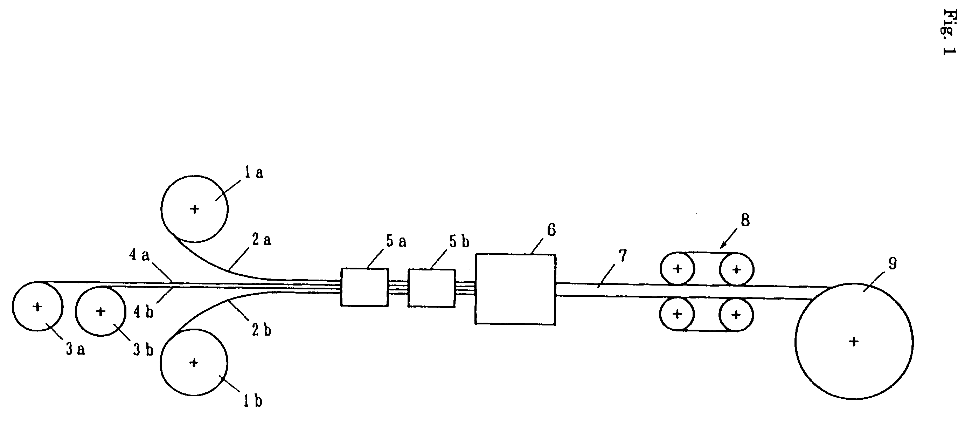

Fig. 1 is a schematic diagram showing one embodiment of process for manufacturing a cord-type optical-fiber cable of the invention. In the diagram, 1a and 1b represent supply reels of optical fibers, 2a and 2b optical fibers, 3a and 3b supply reels of tension members, 4a and 4b tension members, 5a and 5b preheaters, 6 an extruder, 7 a cord-type optical-fiber cable, 8 a caterpillar-type capstan, and 9 a take-up reel. In this embodiment, for example, when the cord-type optical-fiber cable has a jacketing of extruded thermoplastic resin over two optical fibers and two tension members as shown in Fig. 6 (B), two optical fibers and two tension members are supplied. The extruder 6 uses an extrusion die and wire guide nipple to form a shape as shown in Fig. 6 (B). However, the cord-type optical-fiber cable of the invention is not limited to the structure shown in Fig. 6 (B); any design may be executed with regard to the number of optical fibers, the number of tension members, and other elements pertaining to the structure of the cable. A design without any tension member leads to a manufacturing method of the cord-type optical-fiber cable having no tension member as shown in Fig. 6 (A).

The optical-fiber supply reels 1a and 1b supply the optical fibers 2a and 2b. The tension-member supply reels 3a and 3b supply the tension members 4a and 4b. The optical fibers and tension members are heated collectively at the preheater 5a or 5b. At the extruder 6, the preheated optical fibers 2a and 2b and tension members 4a and 4b are inserted into the wire guide nipple in such a way as to be located at their specified positions. Subsequently, thermoplastic resin is extruded over the optical fibers and tension members to complete the cord-type optical-fiber cable 7, which is then pulled by the capstan 8 and wound on the take-up reel 9.

The preheaters 5a and 5b may employ any appropriate heating means such as a ceramic heater and a hot-jet type that injects heated air. The preheater 5b placed in the vicinity of the inlet of the extruder 6 is for low-speed extrusion and the preheater 5a is for high-speed extrusion. Each preheater performs heating according to extrusion speed. One-preheater system may be employed so long as the heating conditions are adjusted according to extrusion speed. When the optical fibers 2a and 2b and the tension members 4a and 4b are preheated at 50 °C or higher, the preheating effect to reduce the surface roughness is caused. Actual preheating is conducted at 300 to 400 °C, while the extrusion of jacketing resin is performed at 150 to 200 °C.

Measured results on the surface roughness of the internal surface of PVC jacketing are shown in Fig. 4 with reference to when the preheating was carried out and when the preheating was not carried out. The preheating reduces the average surface roughness (Ra) to less than one fourth and the maximum surface roughness (Rmax) to less than one third as compared with those obtained without the preheating. Thus the preheating produces the stable, smooth internal surface of a PVC jacketing.

The preheating also reduces the transmission loss significantly as shown in Fig. 5.

As mentioned above, the preheating of optical fibers 2a and 2b and the tension members 4a and 4b performed before the extrusion of jacketing resin re-duces the temperature difference between the jacketing resin heated at the specified temperature and the optical fibers 2a and 2b to almost zero or to a small value. This suppresses or reduces the development of surface roughness on the internal surface of the jacketing and suppresses the increase in transmission loss.

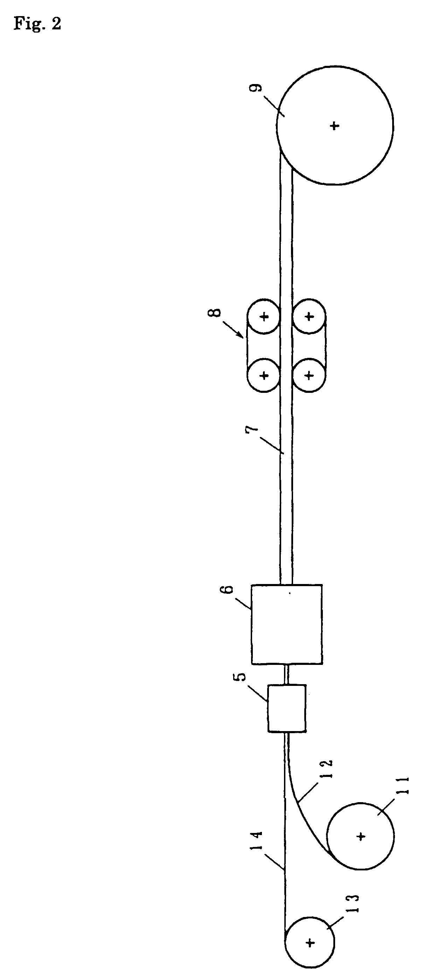

Fig. 2 is a schematic diagram showing another embodiment of a process for manufacturing a cord-type optical-fiber cable of the invention. In the diagram, the same numerals are assigned to the portions same as those in Fig. 1 and their explanations are omitted; 5 represents a preheater, 11 a supply reel of an optical fiber ribbon, 12 an optical fiber ribbon, 13 a supply reel of a tension member, and 14 a fibrous tension member

This embodiment is a method for the manufacture of such a cord-type optical-fiber cable having an optical fiber ribbon as shown in Fig. 6 (C). The optical fiber ribbon supply reel 11 supplies the optical fiber ribbon 12. The tension-member supply reel 13 supplies the tension member 14, which comprises a multitude of fibrous materials. Both the optical fiber ribbon and tension member are heated collectively at the preheater 5. At the extruder 6, the preheated optical fiber ribbon 12 and tension member 14 are inserted into the wire guide nipple in such a way as to be located at their specified positions. Subsequently, thermoplastic resin is extruded to form a loose-structure jacketing to complete the cord-type optical-fiber cable 7, which is then pulled by the capstan 8 and wound on the take-up reel 9. As the fibrous tension member 14, aromatic polyamide-based plastic fiber (aramid fiber) is used.

The preheating of the optical fiber ribbon 12 and the fibrous tension member 14 performed prior to their entry into the extruder 6 reduces the temperature drop of the wire guide nipple in the extruder 6. This suppresses the development of surface roughness on the internal surface of the jacketing of the completed cord-type optical-fiber cable 7.

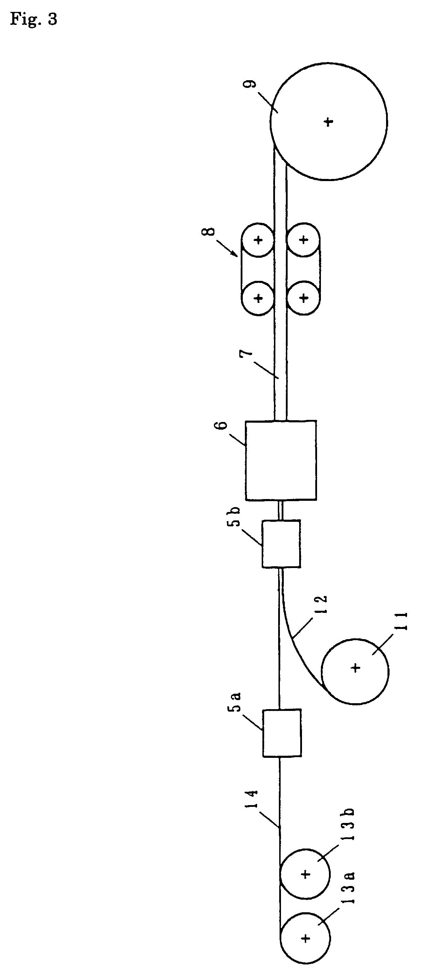

Fig. 3 is a schematic diagram showing still another embodiment of a process for manufacturing a cord-type optical-fiber cable of the invention. In the diagram, the same numerals are assigned to the portions same as those in Figs. 1 and 2 and their explanations are omitted; 13a and 13b represent supply reels of tension members.

This embodiment is the second embodiment of the cord-type optical-fiber cable, wherein the fibrous tension member 14 is supplied in a great volume. To cope with this volume, two preheaters are used. The preheater 5a heats the fibrous tension member 14 only, and the preheater 5b in front of the inlet of the extruder 6 collectively heats the optical fiber ribbon 12 and the preheated fibrous tension member 14. When the fibrous tension member is used in a great volume, such preheating of only the tension member prevents excessive preheating of the optical fiber ribbon.

The present invention is particularly effective in the following types of cord-type optical-fiber cables:
(a) a cord-type optical-fiber cable having a thermoplastic-resin jacketing extruded over optical fibers or optical fiber ribbons;
(b) a cord-type optical-fiber cable having a thermoplastic-resin jacketing collectively extruded over tension members and either optical fibers or optical fiber ribbons;
(c) a cord-type optical-fiber cable having a thermoplastic-resin jacketing collectively extruded over optical fibers, optical fiber ribbons, and tension members;
(d) a cord-type optical-fiber cable having a thermoplastic-resin jacketing loosely extruded over a fibrous tension member longitudinally laid around optical fibers or optical fiber ribbons; and
(e) a cord-type optical-fiber cable having a thermoplastic-resin jacketing loosely extruded over a fibrous tension member longitudinally laid around optical fibers and optical fiber ribbons.

## Claims

1. A cord-type optical-fiber cable comprising one or more optical fibers and a jacketing of thermoplastic resin extruded over said optical fibers, wherein the surface roughness of the internal surface of said jacketing that contacts with said optical fibers is 1.8 µm or less in average surface roughness (Ra).

2. A cord-type optical-fiber cable comprising one or more optical fibers, tension members and a jacketing of thermoplastic resin extruded over said optical fibers and tension members, wherein the surface roughness of the internal surface of said jacketing that contacts with the optical fibers is 1.8 µm or less in average surface roughness (Ra).

3. A cord-type optical-fiber cable comprising one or more optical fibers, a fibrous tension member longitudinally laid around said optical fibers, and a jacketing of thermoplastic resin extruded over said fibrous tension member, wherein surface roughness of the internal surface of said jacketing that contacts with the optical fibers is 1.8 µm or less in average surface roughness (Ra).

4. A manufacturing method of cord-type optical-fiber cables comprising one or more optical fibers and a jacketing of thermoplastic resin extruded over said optical-fibers, which is characterized in that said optical fibers are heated before a thermoplastic resin is extruded to form said jacketing.

5. A manufacturing method of cord-type optical-fiber cables comprising one or more optical fibers, tension members and a jacketing of thermoplastic resin extruded over said optical fibers and tension members, which is characterized in that said optical fibers is heated before said thermoplastic resin is extruded to cover said optical fibers and tension members.

6. A manufacturing method of cord-type optical-fiber cables comprising optical fibers, a fibrous tension member longitudinally laid around said optical fibers and a jacketing of thermoplastic resin extruded thereover, wherein at least either of said optical fibers and said tension member are heated before said thermoplastic resin is extruded to cover said optical fibers and said fibrous tension member.

7. A manufacturing method of cord-type optical-fiber cables as defined in any one of the claims 4 through 6, wherein the preheating is carried out at a temperature of 50 °C or higher.
